# EUROPÄISCHE PATENTSCHRIFT

(11) **EP 0 392 229 B1**
(45) Veröffentlichungstag und Bekanntmachung des Hinweises auf die Patenterteilung: **03.05.1995**
(21) Anmeldenummer: 90105474.2
(22) Anmeldetag: 23.03.1990
(51) Int. Cl.: H04L 25/06

(54) **Schaltungsanordnung zur Kompensation einer Offsetspannung und Verwendung dieser Schaltungsanordnung**
Circuit for the compensation of an offset voltage and application of this circuit
Circuit pour compenser une tension de déviation et application de ce circuit

(30) Priorität: 08.04.1989 DE 3911486
(43) Veröffentlichungstag der Anmeldung: 17.10.1990
(73) Patentinhaber: ANT Nachrichtentechnik GmbH, D-71522 Backnang (DE)
(72) Erfinder: Ottka, Manfred, Dipl.-Ing., D-7158 Sulzbach (DE); Kühn, Andreas, Dipl.-Ing. (FH), D-7154 Althütte (DE)

(56) Entgegenhaltungen:
- US-A- 3 731 199
- US-A- 4 250 458
- US-A- 4 263 555
- US-A- 4 965 867

## Beschreibung

Die Erfindung betrifft eine Schaltungsanordnung zur Kompensation einer Offsetspannung nach dem Oberbegriff des Patentanspruches 1 und eine Verwendung dieser Schaltungsanordnung nach dem Oberbegriff des Patentanspruches 4.

In der Praxis sind Signale mit bekanntem Erwartungswert durch unterschiedliche Einflüsse häufig mit unerwünschten zeitlich sich nur langsam ändernden Signalen überlagert. Diese Signale, meist als Offsetspannung (oder-strom) bezeichnet, können bekanntlich in Regelungsschaltungen kompensiert werden. Als Eingangssignale können dabei sowohl Signale mit diskreter als auch mit kontinuierlicher Verteilung, wie z.B. Multilevel-Datensignale, mehrdimensionale Multilevel-Datensignale, z.B. zweidimensionale quadraturamplitudenmodulierte (QAM)-Datensignale verwendet werden. Per Definition sind diese Signale im allgemeinen mittelwertfrei und die Datenstatistik wird meist so gewählt, daß auch nach Quantisierung des Signals völlige Mittelwertfreiheit herrscht. In der Praxis wirken jedoch mannigfaltige Einflüsse, die diese Eigenschaft zunichte machen.

Es sind Verfahren zur Kompensation der Offsetspannung oder einer langsamen Offsetspannungsdrift bekannt, die bestimmte Bereiche der Signalverteilung ausblenden, um Mehrdeutigkeiten des Regelsignals zu vermeiden. Nicht notwendig ist dieses Ausblenden bei zweistufigen Signalen, da hier immer Eindeutigkeit herrscht. Je größer jedoch die Anzahl der diskrete Signalstufen ist, umso größer die Gefahr der Mehrdeutigkeit des Regelsignals.

Aus der US 4,250,458 ist eine Schaltung zum Feststellen und Kompensieren einer Offset-Spannung angegeben, die folgende Komponenten aufweist:
einen Analog/Digital-Wandler, mit dem das analoge Eingangssignal in ein Digitalsignal gewandelt wird, wobei das Digitalsignal Polarität und Amplitude des Analogsignals zu bestimmten Zeitpunkten wiedergibt, eine logische Verknüpfungseinheit, die ein erstes logisches Signal erzeugt, falls das Digitalsignal entweder ein Analogsignal der einen Polarität mit einer Amplitude größer als ein vorgegebener Schwellwert darstellt oder ein Analogsignal der anderen Polarität mit einer Amplitude kleiner als der vorgegebene Schwellwert darstellt und mit einer Einheit zur Erzeugung eines Kontrollsignals, das dem Analogsignal überlagert wird und das Abweichungen des ersten logischen Signals vom 50% Tastverhältnis angibt.

Aus der EP 180 969 A2 ist eine automatische Niveauregelung für Analog/Digital-Wandler bekannt. Dabei ist eine kombinierte Komparator- und Diskriminatorstufe vorgesehen. Ein Eingangssignal und ein Referenzsignal werden dieser Stufe zugeführt. Das Referenzsignal wird aus dem Digitalsignal und einem von der Diskriminatorstufe erzeugten Fehlersignal durch logische Verknüpfung in einer Verknüpfungseinheit und durch Mittelung in einem Filter erzeugt.

Aus der EP 0 120 474 B1 ist eine Schaltung zur Steuerung einer Gleichspannung bekannt, die eine Gleichspannungsüberlagerungseinrichtung aufweist, einen Diskriminator zum Diskriminieren eines Ausgangssignals der Überlagerungseinrichtung und zum Erzeugen eines Digitalsignals und eines Fehlersignals, einen Steuersignalgenerator zum Erzeugen des Steuersignals in Abhängigkeit von einigen oder allen Bit des Digitalsignals und/oder vom Fehlersignal und einen Begrenzer zum Begrenzen des Ausgangssignals. Zum Erzeugen des Steuersignals werden einige Bit des Ausgangssignals und das Fehlersignal logisch verknüpft. Ein Tiefpaßfilter ist vorgesehen.

Der verwendete Diskriminator, beispielsweise ein A/D-Wandler, muß für die beiden beschriebenen Schaltungen derart ausgelegt sein, daß er neben den für das digitale Signal notwendigen Bits auch noch die für das Fehlersignal notwendigen Bits erzeugt. Die Auflösung des A/D-Wandlers muß also relativ hoch sein.

Es ist Aufgabe der Erfindung, eine Schaltungsanordnung anzugeben, die die Offsetspannung und eine Drift dieser Spannung kompensiert und mit einfachen Mitteln realisierbar ist. Eine Verwendung der Schaltungsanordnung ist anzugeben.

Die Aufgabe wird bezüglich der Schaltungsanordnung mit den Merkmalen des Anspruchs 1 gelöst. Eine Verwendung der Schaltungsanordnung ist in Anspruch 7 angegeben. Vorteilhafte Weiterbildungen sind in den Unteransprüchen 2 bis 6 beschrieben.

Die erfindungsgemäße Schaltungsanordnung verwendet alle Bereiche der Signalverteilung, um ein Kompensationssignal zu erzeugen. Dies hat den Vorteil, daß ein Maximum an Regelinformation zur Verfügung steht, um schnellstmögliche Regelungen zu realisieren.

Die erfindungsgemäße Schaltungsanordnung kann vorteilhaft in verschiedenen Nachrichtenübertragungssystemen verwendet werden. In solchen Systemen befindet sich der A/D-Wandler häufig zwischen einem Übertragungskanal, oft nur als Kanal bezeichnet, und einem notwendigen Kanalentzerrer. Der Kanal charakterisiert die Eigenschaften der Übertragungsstrecke, z.B. die Wellenausbreitungseigenschaften der Atmosphäre bei Richtfunkstrecken, und kann je nach Zustand verzerrungsfrei sein (transparenter Kanal) oder Verzerrungen aufweisen. Der dem A/D-Wandler nachgeschaltete Entzerrer hat die Aufgabe, den durch die nichtidealen Eigenschaften des Kanals entstehenden zeitvariablen Verzerrungen adaptiv entgegenzuwirken.

Bei dem schwierigen Betriebszustand des verzerrten Kanals bleibt bei bisherigen Lösungen nur die Möglichkeit, Regelinformation am Ausgang eines nachgeschalteten Entzerrers zu gewinnen, was den Nachteil verketteter Regelkreise mit sich bringt. Um diese Verkettung zu vermeiden, ergibt sich die Forderung an dieses Verfahren, auch bei Signalen mit kontinuierlicher Amplitudenverteilung zu arbeiten, und damit selbst bei linear verzerrtem Übertragungskanal sinnvolle Regelinformation aus dem quantisierten Multilevelsignal gewinnen zu können. Die Linearkombination von m Bits, m ≧ 2, der zur Verfügung stehenden n Bits bringt den Vorteil des geringeren Aufwandes in der Hardware für m < n oder eine unter Umständen schnellere Regelung für m = n.

Die Funktion der Schaltungsanordnung basiert auf einer geeigneten Gewichtung und additiven Verknüpfung (Linearkombination) der Bits des binären Digitalsignals. Die Gewichtung der Bits kann dabei so gewählt werden, daß auch bei höherstufigen Multilevelsignalen die zuvor erwähnte Mehrdeutigkeit des Regelsignals vermieden werden kann, ohne bestimmte Bereiche der Verteilung ausblenden zu müssen und damit eine geringere Regelinformation in Kauf nehmen zu müssen. Das binäre Datensignal wird so ausgewertet, daß ein Kompensationssignal entsteht, das dem Eingangssignal überlagert wird und die Gleichspannungsdrift im Mittel kompensiert.

Bei üblichen Multileveldatensignalen reicht die geeignete Linearkombination von 2 bit aus, um eine brauchbare Regelkennlinie zu erzeugen. Die von der Verknüpfungseinheit ausgegebenen Signale werden derart gefiltert, daß ein zufriedenstellendes Kompensationssignal entsteht.

Anhand der Zeichnungen werden Ausführungsbeispiele der Erfindung erläutert.
Es zeigen
Figur 1 ein Blockschaltbild der erfindungsgemäßen Schaltungsanordnung,
Figur 2 die Quantisierung eines 64 QAM-Signals,
Figur 3 die Schaltungsanordnung eines Kompensationssignalgenerators für 64 QAM-Signale,
Figur 4 eine Regelkennlinie für ein 64 QAM-Signal.

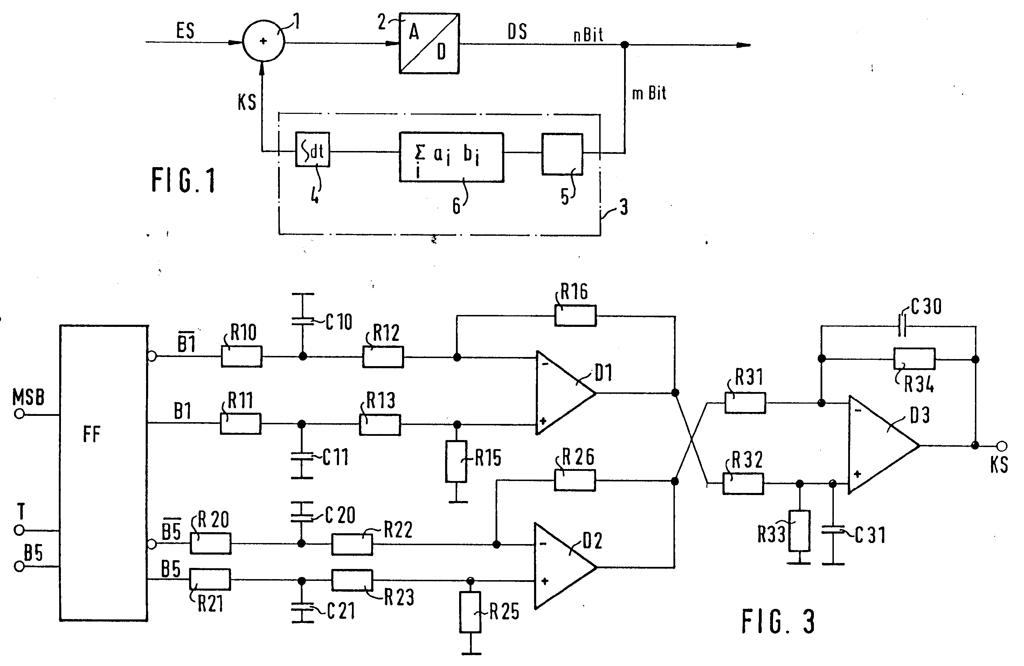

In Figur 1 erkennt man, daß das Eingangssignal ES in einer Überlagerungseinrichtung 1 mit einem Kompensationssignal KS überlagert wird. Das so gewonnene Signal wird einem Diskriminator 2, in Figur 1 einem A/D-Wandler, zugeführt. Im A/D-Wandler wird das analoge Signal, das sich aus dem Eingangssignal ES und dem Kompensationssignal KS zusammensetzt, in ein binäres Digitalsignal DS umgewandelt.

Das Digitalsignal DS ist ein n Bit breites Signal. Von diesen n Bit werden m Bit, m ≧ 2, abgetastet, wobei m ≦ n ist. die m abgetasteten Bit werden einem Kompensationssignalgenerator 3 zugeführt. Zunächst wird in den Mitteln zur Mittelung 5 eine zeitliche Mittelung der Abtastwerte durchgeführt. Dann werden sie einer Verknüpfungseinheit 6 zugeführt, in der sie gewichtet und additiv verknüpft werden. Das durch die Linearkombination entstandene Signal wird einem Filter 4 zugeführt, das ein Integrator ist, der das Signal in ein gültiges Kompensationssignal KS überführt. Die Signale werden so auf einen Mittelwert von 0 eingeregelt. Für mittelwertfreie Signale erhält man also den gewünschten Mittelwert 0. Für Eingangssignale mit bekanntem Erwartungswert ungleich 0 erhält man ebenfalls eine Regelung auf den Mittelwert 0. Zu diesem Mittelwert des Digitalsignals kann der bekannte Erwartungswert dann hinzuaddiert werden.

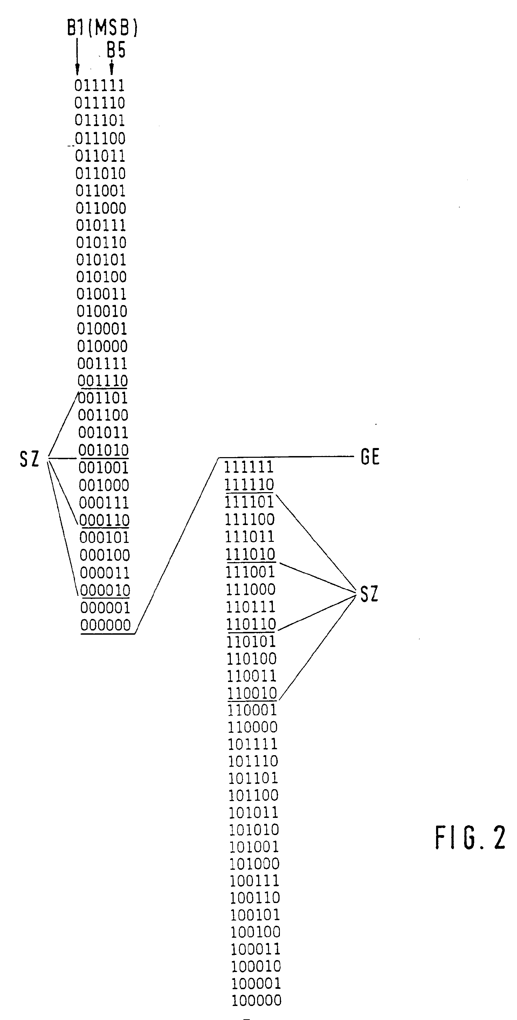

Figur 2 zeigt eine Quantisierungsvorschrift für ein 64 QAM-Signal. Durch horizontale Linien sind die Sollzustände SZ des digitalen Signals gekennzeichnet. Eine weitere horizontale Linie deutet die Lage des Erwartungswertes GE an. Dieser Erwartungswert ist bei 64 QAM Signalen vorzugsweise 0. Die Signale sind also mittelwertfrei. In Figur 2 sind 64 Intervalle dargestellt, die durch 6 Bit-Worte gekennzeichnet werden. Das linke Bit B1 (Most Significant Bit MSB) gibt an, ob der Abtastwert in einem Intervall größer oder kleiner als der Erwartungswert liegt. Das zweite Bit von rechts B5 zeigt immer dann einen Wechsel von 0 nach 1, wenn der Abtastwert von einem Intervall unterhalb eines Sollzustandes in ein Intervall oberhalb des Sollzustandes wechselt. Zur Bildung des Kompensationssignals ist es im vorliegenden Anwendungsfall ausreichend, die Bits B1 und B5 zu verwenden.

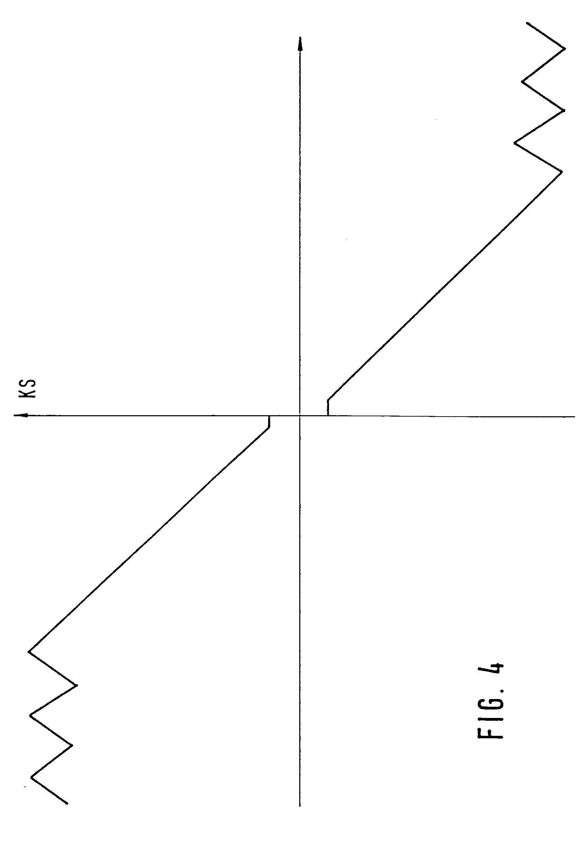

Figur 3 zeigt, wie diese beiden Bits im Kompensationssignalgenerator KS weiterverarbeitet werden. Mit je einem über den Eingang T getakteten Flip-Flop im Flip-Flop-Feld FF werden die beiden relevanten Bits MSB und B5 des A/D-Wandlers 2 abgetastet. Das Flip-Flop-Feld FF gibt die beiden relevanten Bits jeweils in invertierter und nichtinvertierter Form aus. Der erste und dritte Ausgang von oben auf der rechten Seite des Flip-Flop-Feldes FF bezeichnen jeweils die invertierten, der zweite und vierte Ausgang die nichtinvertierten Bitsignale. Es werden für jedes Bitsignal zwei Signalpfade, einen für das Signal und einen für das invertierte Signal, beschrieben. Realisierungsbedingte, an sich störende Offsetspannungen in den Flip-Flop-Ausgangssignalen werden dann durch eine hohe Gleichtaktunterdrückung der nachgeschalteten Verstärker weitgehend beseitigt. Jeder Signalweg weist einen Tiefpaß auf, der sich aus den Widerständen R10 und R12, R11 und R13, R20 und R22, R21 und R23 und dem Kondensator C10, C11, C20 bzw. C21 zusammensetzt. Dieser Tiefpaß dient zur Mittelwertbildung. Auf diese Weise können Operationsverstärker D1, D2 mit geringerer Bandbreite eingesetzt werden. Anschließend an diese Filter befinden sich als Differenzverstärker geschaltete Operationsverstärker D1 und D2 mit den Widerständen R15 und R16 bzw. R25 und R26, die auch die Gewichtung gemäß der Bildungsvorschrift für die Linearkombination vornehmen. Wenn beispielsweise beim MSB-Signal gleich häufig Einsen und Nullen vorkommen, so wird das Ausgangssignal am Operationsverstärker zu Null Volt, ebenso beim Signal B5. Erst das ungleich häufige Auftreten von Einsen und Nullen erzeugt ein Ausgangssignal, das ungleich Null Volt ist. Die Gewichtung des MSB-Signals beträgt in unserem Fall 1, die Gewichtung des Bit B5 beträgt ein Achtel. Der den beiden gewichtenden Operationsverstärkern D1 und D2 nachgeschaltete Verstärker D3 mit den Widerständen R31 bis R34 und den Kondensatoren C30 und C31 dient als Integrator mit Differenzeingang. Hier werden die beiden Teilsignale aus den Operationsverstärkern D1 und D2 subtrahiert, die Linearkombination (1 · MSB - 1/8 · B5) ist dann durchgeführt. Die Beschaltung des Ausgangsverstärkers D3 legt die Integrationskonstante fest. Am Ausgang des Integrators erhält man das Kompensationssignal KS. Dieses Kompensationssignal KS wird über einen Subtrahierer dem Eingangssignal zugeführt.

In Figur 4 ist eine Regelkennlinie dargestellt, die das Verhalten des eben beschriebenen Regelkreises beschreibt. Die Kennlinie weist lediglich einen Nulldurchgang auf, ist in eben diesem Nulldurchgang sehr steil und umschreibt eine relativ große Fläche.

## Patentansprüche

1. Schaltungsanordnung zur Kompensation einer Offset-Spannung oder einer Drift dieser Spannung mit einer Überlagerungseinrichtung (1) zur Überlagerung eines Kompensationssignals (KS) mit einem Eingangssignal (ES) mit bekanntem Erwartungswert, insbesondere mit einem Multilevel-Signal, mit Diskriminator (2) zur Erzeugung eines binären Digitalsignals (DS) mit n Bit aus dem mit dem Kompensationssignal (KS) überlagerten Eingangssignal (ES), mit einem Kompensationssignalgenerator (3) zur Erzeugung des Kompensationssignals (KS), dadurch gekennzeichnet, daß der Kompensationssignalgenerator (3) eine Verknüpfungseinheit zur Durchführung einer Gewichtung und einer additiven Verknüpfung von m der n Bit des binären Digitalsignals (DS), m ≧ 2, m ≦ n, und ein Filter (4) zur überführung des nach der Gewichtung und additiven Verknüpfung der m Bit erhaltenen Signals in ein Kompensationssignal (KS) aufweist.

2. Schaltungsanordnung nach Anspruch 1, dadurch gekennzeichnet, daß der Kompensationssignalgenerator (3) vor der Verknüpfungseinheit (6) Mittel zur Mittelung (5) über jeweils mehrere Abtastwerte von m der n Bit des binären Digitalsignals (DS), m ≦ n, aufweist.

3. Schaltungsanordnung nach Anspruch 2, dadurch gekennzeichnet, daß als Mittel zur Mittelung (5) Tiefpaßfilter eingesetzt sind.

4. Schaltungsanordnung nach einem der Ansprüche 1 bis 3, dadurch gekennzeichnet, daß als Filter (4) ein Integrator eingesetzt ist.

5. Schaltungsanordnung nach einem der Ansprüche 1, 2, 3 oder 4, dadurch gekennzeichnet, daß der Integrator des Kompensationssignalgenerators (3) mit einer Subtraktionsstufe als Überlagerungseinrichtung (1) verbunden ist.

6. Schaltungsanordnung nach einem der Ansprüche 2 bis 5, dadurch gekennzeichnet, daß die Mittel zur Mittelung (5) und die Verknüpfungseinheit (6) zwei der n Bit des binären Datensignals (DS) verarbeiten.

7. Verwendung der Schaltungsanordnung nach einem der vorhergehenden Ansprüche für zweidimensionale Multilevel-Eingangssignale (ES), wobei die Regelung der Gleichspannung für jede Dimension unabhängig voneinander durchgeführt wird.

## Claims

1. A circuit arrangement for compensating an offset voltage or a drift of this voltage, having a superimposition device (1) for superimposing on a compensating signal (KS) an input signal (ES) of a known expected value, in particular a multi- level signal, having a discriminator (2) for generating a binary digital signal (DS) with n bits from the input signal (ES) on which the compensating signal (KS) has been superimposed, having a compensating signal generator (3) for generating the compensation signal (KS), characterized in that the compensating signal generator (3) has a cross-linking unit for performing a weighting and an additive cross-linking of m of the n bits of the digital signal (DS), m ≧ 2, m ≦ n, and a filter (4) for changing the signal obtained after weighting and cross-linking of the m bits into a compensating signal (KS).

2. A circuit arrangement in accordance with claim 1, characterized in that the compensating signal generator (3) upstream of the cross-linking unit (6) has means for averaging (5), via respectively several scanning values, m of the n bits of the binary digital signal (DS), m ≦ n.

3. A circuit arrangement in accordance with claim 2, characterized in that low bandpass filters are employed as means for averaging (5).

4. A circuit arrangement in accordance with one of claims 1 to 3, characterized in that an integrator is employed as filter (4).

5. A circuit arrangement in accordance with one of claims 1, 2, 3 or 4, characterized in that the integrator of the compensating signal generator (3) is connected with a subtraction stage representing the superimposing device (1).

6. A circuit arrangement in accordance with one of claims 2 to 5, characterized in that the means for averaging (5) and the cross-linking unit (6) process two of the n bits of the binary data signal.

7. Use of the circuit arrangement in accordance with one of the preceding claims for two-dimensional multi-level input signals (ES), wherein the regulation of the dc voltage for each dimension is performed independently of each other.

## Revendications

1. Circuit pour compenser une tension de déviation ou de décalage, ou une dérive de cette tension, comprenant un dispositif de superposition (1) pour superposer un signal de compensation (KS) à un signal d'entrée (ES) ayant une valeur escomptée connue, en particulier à un signal multiniveau, un discriminateur (2) pour générer un signal numérique binaire (DS) à n bits à partir du signal d'entrée (ES) auquel est superposé le signal de compensation (KS), de même qu'un générateur de signal de compensation (3) pour générer le signal de compensation (KS), caractérisé en ce que le générateur de signal de compensation (3) comporte une unité combinatoire pour effectuer une pondération et une combinaison additive de m bits parmi les n bits du signal numérique binaire (DS), m ≧, m ≦ n, et un filtre (4) pour transformer le signal obtenu à la suite de la pondération et de la combinaison additive des m bits en un signal de compensation (KS).

2. Circuit selon la revendication 1, caractérisé en ce que le générateur de signal de compensation (3) comporte, avant l'unité combinatoire (6), des moyens (5) pour la formation de la moyenne de chaque fois plusieurs échantillons de m bits des n bits du signal numérique binaire (DS), m ≦ n.

3. Circuit selon la revendication 2, caractérisé en ce que les moyens (5) pour la formation de la moyenne sont des filtres passe-bas.

4. Circuit selon une des revendications 1 à 3, caractérisé en ce que le filtre (4) utilisé est un intégrateur.

5. Circuit selon une des revendications 1, 2, 3 ou 4, caractérisé en ce que l'intégrateur du générateur de signal de compensation (3) est connecté à un étage de soustraction en tant que dispositif de superposition (1).

6. Circuit selon une des revendications 2 à 5, caractérisé en ce que les moyens (5) pour la formation de la moyenne et l'unité combinatoire (6) traitent deux des n bits du signal numérique binaire (DS).

7. Application du circuit selon une des revendications précédentes pour des signaux d'entrée (ES) multiniveaux bidimensionnels, les régulations de la tension continue pour chaque dimension étant effectuées indépendamment l'une de l'autre.
